# EUROPEAN PATENT SPECIFICATION

(11) **EP 4 287 987 B1**
(45) Date of publication and mention of the grant of the patent: **02.04.2025**
(21) Application number: 22704957.4
(22) Date of filing: 03.02.2022
(51) Int. Cl.: A61C 8/00

(54) **KIT FOR THE EXECUTION OF POST-EXTRACTION DENTAL IMPLANT SURGERY**
KIT ZUR DURCHFÜHRUNG EINER POSTEXTRAKTIONSZAHNIMPLANTATOPERATION
KIT POUR L'EXÉCUTION D'UNE CHIRURGIE D'IMPLANT DENTAIRE POST-EXTRACTION

(30) Priority: 08.02.2021 IT 202100002762
(43) Date of publication of application: 13.12.2023
(73) Proprietor: J DENTAL CARE SRL, 41123 Modena (MO) (IT)
(72) Inventor: GRANDI, Tommaso, 41122 Modena (MO) (IT)
(74) Representative: Luppi, Emanuele
(86) International application number: PCT/IB2022/050939
(87) International publication number: WO 2022/167965

(56) References cited:
- WO-A1-2014/199332
- KR-B1- 101 172 499
- US-A1- 2006 210 949

## Description

### Technical Field

The present invention relates to a kit for the execution of post-extraction dental implant surgery.

### Background Art

As is known, a dental implant substantially consists of a screw which is placed inside the alveolar bone to replace a tooth that has been extracted or is missing. This allows a stump, commonly known as "abutment", to be attached thereto, protruding externally from the cavity and serving a structural function.

The abutment can be of various types and can be replaced if, for example, it is damaged.

Finally, a dental crown is placed on the abutment to replace the missing tooth in appearance and functionality.

With particular reference to the installation operations of the implant immediately after the extraction of the tooth (commonly called post-extraction implant or immediate implant) the use of drills is known for the removal of part of the alveolar bone, i.e. the bone which surrounds in a radial pattern the alveolar cavity left empty by the extracted tooth, in order to subsequently install the dental implant.

This operation is necessary in order to ensure enough space for the implant to be inserted into the alveolar bone and, at the same time, to ensure the introduction thereof with the correct inclination.

**In** fact, the post-extraction implant should not be inserted following the inclination of the empty dental alveolus but it is crucial that it is inserted in a more palatal/lingual position than the alveolus, for two main reasons:
- the inclination of the alveolus, especially in the incisive/premolar area, is vestibular and, therefore, if the drills followed the natural conformation of the dental alveolus, this would lead to a vestibular perforation of the alveolar bone with consequent lack of stability of the post-extraction implant;
- a vestibular inclination of the implant may cause a recession of the hard and soft tissues within a few months after surgery, with exposure of the implant and consequent unsatisfactory rehabilitation aesthetics.

In this regard, precisely to avoid the difficulties and the aesthetic risk mentioned above, it is often preferred to carry out the implant installation operation even several months after the extraction of the tooth to allow, on the one hand, the restoration of the mucous membranes, but above all, on the other hand, the reconstruction and/or healing of the alveolar bone which is necessary to facilitate the insertion of the implant with the correct inclination.

Once the patient undergoes the second session, in fact, the osteotomy for the implant is prepared with the correct inclination through the use of the above mentioned drills.

These are typically cylindrical in shape with a constant cross-section, so they work evenly along their entire length, substantially removing the same amount of bone anywhere along the osteotomy of the alveolar bone.

In this context it is crucial, of course, to remove a sufficient amount of bone so that the implant can physically enter the cavity, but at the same time not too much because, in this case, there wouldn't be enough bone to allow a solid and long-lasting fixation of the implant itself.

It is common practice, therefore, to install the implant after a sufficient period of time, so that in the space left empty by the tooth extraction, enough bone can reform to work with the drill, and then wait for a further period, probably in the order of three to four months, to ensure the proper integration of the implant itself within the human body; only at that point can the operation be finally completed through the application of the dental crown over the implant.

This common practice is, however, particularly problematic for the patients, who not only have to undergo several operations spread over a relatively long period of time (i.e. one for the extraction of the teeth, one for the placement of the implant and one for the application of the dental crown), but also find themselves, precisely because of these times, without a tooth for a long time, with obvious functional and aesthetic discomfort.

The morbidity of implant treatment increases, as does the need for medication due to the various surgeries.

In addition to this, it should be noted that the re-growth of the alveolar bone can be inconsistent and this can complicate the subsequent surgery.

It is easy to appreciate, therefore, that the insertion of the implant at the same time as the extraction of the tooth in the aforementioned surgical technique of post-extraction dental implant surgery represents today a potentially much more advantageous treatment than the technique which, instead, provides for a first extraction operation and a separate operation for the insertion of the implant. However, the traditional post-extraction technique, performed with the drills of known type, can make the described operations particularly complex for the operator, who runs the real risk of installing the implant in the vestibular direction and not in the palatal/lingual one as required, with the consequent risks related to a bad inclination of the same.

An exemplary and traditional system of dental implant surgery is disclosed in the patent document US2006/0210949.

### Description of the Invention

The main aim of the present invention is, therefore, to devise a kit for the execution of post-extraction dental implant surgery which allows implementing improvements, at least partial, to the aforementioned drawbacks.

Another object of the present invention is to apply such improvements in the context of a wide range of surgical case histories.

Finally, another object of the present invention is to devise a kit for the execution of post-extraction dental implant surgery, which allows the aforementioned drawbacks of the prior art to be overcome within a simple, rational, easy and effective to use as well as affordable solution.

The aforementioned objects are achieved by the present kit for the execution of post-extraction dental implant surgery having the characteristics of claim 1.

### Brief Description of the Drawings

Other characteristics and advantages of the present invention will become more apparent from the description of a preferred, but not exclusive, embodiment of a kit for the execution of post-extraction dental implant surgery, illustrated by way of an indicative, yet non-limiting example, in the accompanying tables of drawings wherein:
Figure 1 is a front view of the kit according to the invention;
Figure 2 is a front view, on an enlarged scale, of a detail of the kit according to the invention;
Figure 3 is a front view, on an enlarged scale, of another detail of the kit according to the invention;
Figure 4 is a front view, on an enlarged scale, of yet another detail of the kit according to the invention;
Figures 5 to 10 show, in a succession of cross-sectional views, the operation of the kit according to the invention.

### Embodiments of the Invention

With particular reference to these figures, reference numeral 1 globally indicates a kit for the execution of post-extraction dental implant surgery.

The kit 1, in particular, is intended to be used following a tooth extraction operation, which results in the exposure of the alveolar cavity 2 formed into the alveolar bone 3 of a patient.

The kit 1 comprises:
- a plurality of groups 4, 5, 6 of dental implants 7, each group 4, 5, 6 comprising at least one threaded pin 8 having a characteristic diameter D1, D2, D3, the characteristic diameter D1, D2, D3 of each group 4, 5, 6 of dental implants 7 being different from the characteristic diameter D1, D2, D3 of the other groups 4, 5, 6 of dental implants 7; and
- a plurality of dental drills 18, 19, 20, each of which is provided with:
   - at least one proximal portion 11, connectable to a tool for the setting in rotation;
   - at least one working median portion 12, having a reference diameter d1, d2, d3 and adapted to remove at least one part of the alveolar bone 3;
   - at least one non-working distal portion 13, adapted to be inserted, in use, inside a corresponding apical portion 9 of the alveolar cavity 2 without removal of the alveolar bone 3;
wherein each dental drill 18, 19, 20 corresponds to one group of dental implants 7 and has the corresponding reference diameter d1, d2, d3 which is substantially matching the characteristic diameter D1, D2, D3 of the corresponding group 4, 5, 6 of dental implants 7.

In the particular embodiment shown in the figures, the following are provided:
- a first group 4 of dental implants 7, composed of four dental implants 7, and a respective first dental drill 18;
- a second group 5 of dental implants 7, composed of two dental implants 7, and a respective second dental drill 19;
- a third group 6 of dental implants 7, composed of an individual dental implant 7, and a respective third dental drill 20.

Alternative embodiments cannot however be ruled out wherein the kit 1 comprises a different number of groups 4, 5, 6 (e.g., two, four or five, each of which composed of a different number of dental implants 7) and a different number of dental drills 18, 19, 20.

In any case, each group 4, 5, 6 is distinguished by the fact that it comprises dental implants 7 all having the same characteristic diameter D1, D2, D3.

The characteristic diameter D1 of the first group 4 is, e.g., comprised between 3.5-3.9 mm, better still between 3.6-3.8 mm, preferably 3.7 mm.

The characteristic diameter D2 of the second group 5 is, e.g., comprised between 4.1-4.5 mm, better still between 4.2-4.4 mm, preferably 4.3 mm.

The characteristic diameter D3 of the third group 6 is, e.g., comprised between 4.8-5.2 mm, better still between 4.9-5.1 mm, preferably 5 mm.

Alternative embodiments of the present invention cannot however be ruled out wherein there is a group of dental implants 7 having a characteristic diameter different from those mentioned and, e.g., comprised between 3.0-3.4 mm, better still between 3.1-3.3 mm, preferably 3.2 mm.

Within the same group 4, 5, 6, the dental implants 7 differ from each other due to other characteristics, such as e.g. geometry, shape, size, material or the like.

For example, the threaded pins 8 have a characteristic length L1, L2, L3, L4, and the characteristic lengths L1, L2, L3, L4 of the threaded pins 8 belonging to the same group 4, 5, 6 of dental implants 7 are different from each other.

Therefore, it should be noted that, in the embodiment shown in the figures, the first group 4 comprises:
- a dental implant 7 with a threaded pin 8 having a first characteristic length L1;
- a dental implant 7 with a threaded pin 8 having a second characteristic length L2;
- a dental implant 7 with a threaded pin 8 having a third characteristic length L3;
- a dental implant 7 with a threaded pin 8 having a fourth characteristic length L4.

The second group 5 comprises:
- a dental implant 7 with a threaded pin 8 having the first characteristic length L1; and
- a dental implant 7 with a threaded pin 8 having the second characteristic length L2.

Finally, the third group 6 comprises an individual dental implant 7 with a threaded pin 8 having the first characteristic length L1.

The characteristic lengths L1, L2, L3, L4 are selected according to the needs of the dental practice and of the patient.

As an example, the first characteristic length L1 is comprised between 8-12 mm, better still between 9-11 mm, preferably 10 mm.

The second characteristic length L2 is, e.g., comprised between 9.5-13.5 mm, better still between 10.5-12.5 mm, preferably 11.5 mm.

The third characteristic length L3 is, e.g., comprised between 11-15 mm, better still between 12-14 mm, preferably 13 mm.

The fourth characteristic length L4 is, e.g., comprised between 13-17 mm, better still between 14-16 mm, preferably 15 mm.

Alternative embodiments of the present invention cannot however be ruled out wherein dental implants 7 are provided with a characteristic length different from those mentioned above and, for example:
- comprised between 4-8 mm, better still between 5-7 mm, preferably 6 mm;
- comprised between 6-10 mm, better still between 7-9 mm, preferably 8 mm;
- comprised between 16-20 mm, better still between 17-19 mm, preferably 18 mm;
- comprised between 18-22 mm, better still between 19-21 mm, preferably 20 mm;

Each group 4, 5, 6 of dental implants 7 is coupled to a corresponding dental drill 18, 19, 20 having a reference diameter d1, d2, d3 which, as mentioned, is substantially matching the characteristic diameter D1, D2, D3 of the corresponding group 4, 5, 6 of dental implants 7.

In this regard, it is specified that, in the context of the present disclosure, stating that the reference diameter d1, d2, d3 is substantially matching the characteristic diameter D1, D2, D3 means that the reference diameter d1, d2, d3 is coincident with or slightly smaller than the characteristic diameter D1, D2, D3, e.g. smaller than 0.1-0.3 mm.

**In** fact, the threaded pins 8 are intended to be screwed into the alveolar bone 3 within the space obtained by the corresponding dental drill 18, 19, 20 and the fact that the reference diameter d1, d2, d3 is slightly smaller than the characteristic diameter D1, D2, D3 allows the threaded pins 8 to self-thread into the alveolar bone 3 and to ensure a stable coupling.

In this regard, the reference diameter d1 of the first dental drill 18 is, e.g., comprised between 3.4-3.8 mm, better still between 3.5-3.7 mm, preferably 3.6 mm.

The reference diameter d2 of the second dental drill 19 is, e.g., comprised between 3.9-4.3 mm, better still between 4.0-4.2 mm, preferably 4.1 mm.

The reference diameter d3 of the third dental drill 20 is, e.g., comprised between 4.6-5.0 mm, better still between 4.7-4.9 mm, preferably 4.8 mm.

Alternative embodiments of the present invention cannot however be ruled out wherein dental cutters are provided with a reference diameter different from those mentioned and comprised, e.g., between 2.9-3.3 mm, better still between 3.0-3.2 mm, preferably 3.1 mm.

Turning now to describe the dental drills 18, 19, 20, it should be noted that the proximal portion 11, the working median portion 12 and the non-working distal portion 13 of each dental drill 18, 19, 20 are arranged in succession and are aligned along an axis A (axis of the drill), which coincides with the axis of rotation around which the dental drill 18, 19, 20 is rotated by means of the tool 22 (e.g., a dental drill).

In this regard, it should be noted that, in the context of the present disclosure, the term "proximal" and the term "distal" are used with reference to the position of a component with respect to the tool 22; thus, the proximal portion 11 represents a segment of the dental drills 18, 19, 20 which, in use, is intended to be placed closer to the tool 22, while the non-working distal portion 13 represents a segment of the dental drills 18, 19, 20 which, in use, is intended to remain further away from the tool 22.

The proximal portion 11 of each dental drill 18, 19, 20 consists, e.g., of a shank provided with a proximal end 23 shaped to be coupled to the tool 22.

The working median portion 12 of each dental drill 18, 19, 20 comprises at least one first section 24 having a substantially straight cylinder shape and at least one second section 25 having a substantially truncated cone shape.

Conveniently, the first section 24 is in the proximal position with respect to the second section 25; in other words, the first section 24 is connected to the proximal portion 11 on one side and to the second section 25 on the opposite side, while the working median portion 12 is connected to the first section 24 on one side and to the non-working distal portion 13 on the other side.

Preferably, the second truncated cone section 25 has a decreasing cross-section in the direction of approach to the non-working distal portion 13; in other words, the diameter of the truncated cone is maximum at the first section 24 and minimum at the non-working distal portion 13.

The reference diameter d1, d2, d3 of each dental drill 18, 19, 20 corresponds to the diameter of the respective first section 24, which coincides with the largest diameter of the second section 25.

Alternative embodiments of the present invention cannot however be ruled out wherein the working median portion 12 has a different confirmation and, e.g., also has the first section 24 of truncated cone shape.

The working median portion 12 also comprises a plurality of diamond cutting elements arranged on the surface of at least one of the sections 24, 25. Different embodiments cannot, however, be ruled out wherein, instead of the diamond cutting elements, helical or straight blades are used.

The working median portion 12 is provided with reference markings 27 arranged on the surface of the first section 24.

The reference markings 27 comprise at least one depth notch 28 corresponding to at least one specific characteristic length L1, L2, L3, L4 of at least one of the threaded pins 8.

In the context of the present disclosure, stating that the depth notch 28 corresponds to a characteristic length L1, L2, L3, L4 means that the distance of the depth notch 28 from a free end 29 of the non-working distal portion 13 (representing, in actual facts, the tip of the dental drill 18, 19, 20 i.e., the point which is located at a greater distance from the proximal portion 11) is equal to a characteristic length L1, L2, L3, L4.

Conveniently, each reference marking 27 comprises two depth notches 28, which correspond to the edges of the reference marking 27, one distal and one proximal, which are arranged circumferentially along the entire surface of the first section 24.

By providing two reference markings 27, it is possible to identify four edges and then four depth notches 28 arranged at different distances, one for each of the four characteristic lengths L1, L2, L3, L4.

Alternative embodiments of the present invention cannot, however, be ruled out wherein only one reference marking 27 is provided and, therefore, two depth notches 28, or reference markings 27 and depth notches 28 of different types. The non-working distal portion 13 has a substantially truncated-cone shape and has a decreasing cross-section in the direction of moving away from the working median portion 12; in other words, the diameter of the truncated cone of the non-working distal portion 13 is maximum in the proximity of the second section 25 and minimum at the free end 29 of the non-working distal portion 13. Different embodiments are, however, possible wherein, e.g., the non-working distal portion 13 is substantially in the form of a straight cylinder.

The non-working distal portion 13 comprises at least one smooth lateral surface 30 adapted to be placed in sliding contact with the alveolar bone 3.

In other words, the smooth lateral surface 30 is devoid of shear elements and thus slides over the alveolar cavity 2 without removing the alveolar bone 3.

The overall length L5 of the dental drills 18, 19, 20, i.e., the distance between the proximal end 23 and the free end 29, is the same for all the drills and, by way of example, is comprised between 30-38 mm, better still between 32-36 mm, preferably 34 mm.

The operation of the present invention is as follows.

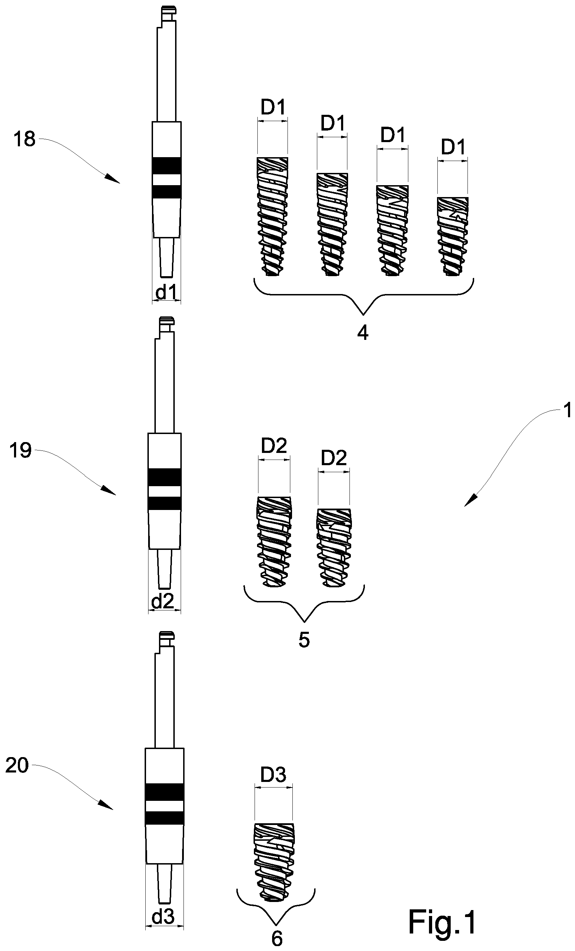

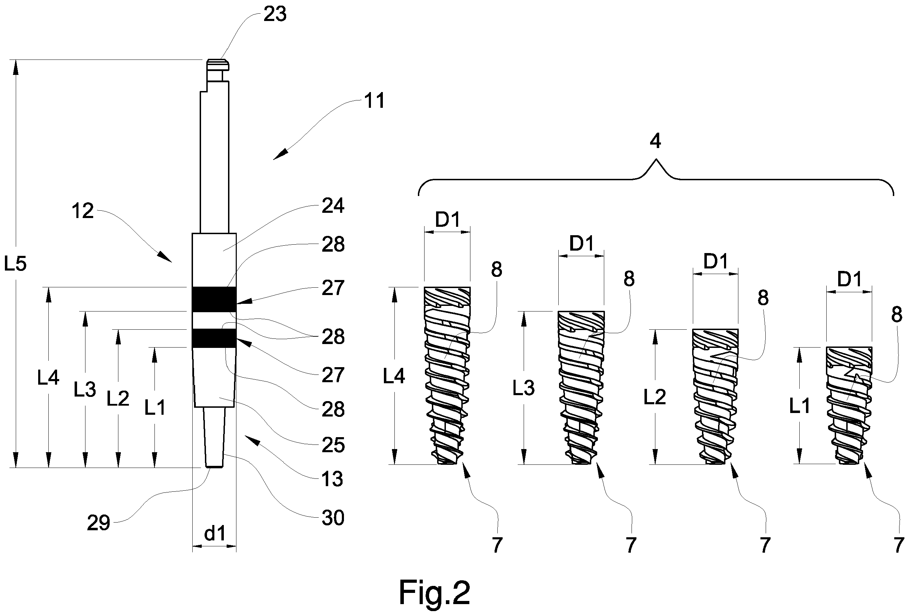

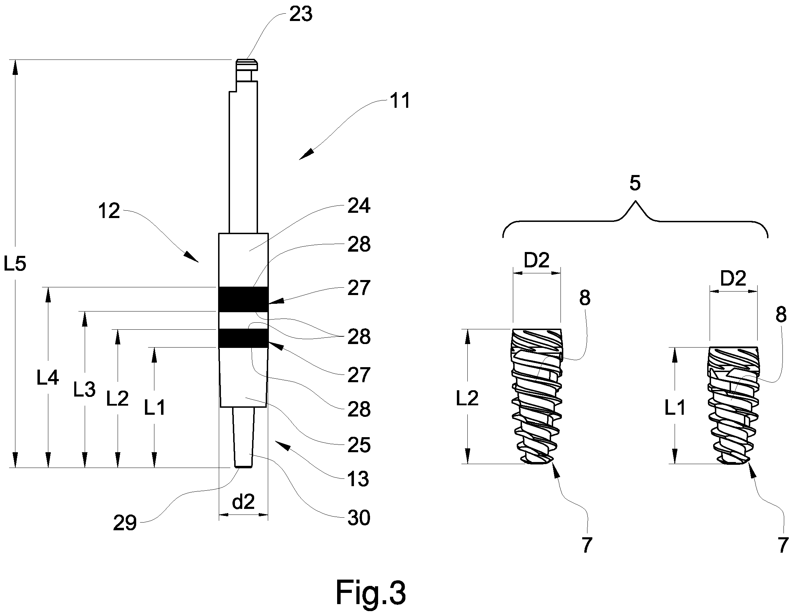

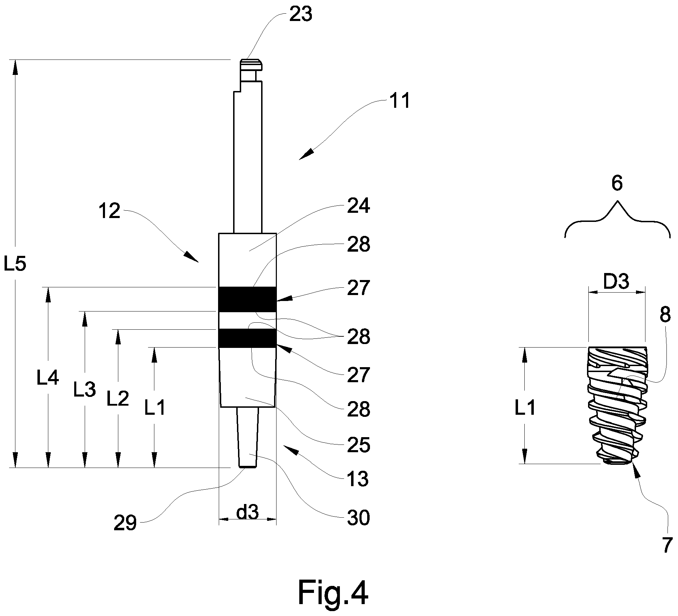

A dental drill 18, 19, 20 chosen according to the technical specifications of the dental implant 7 to be inserted into the alveolar cavity 2 is selected from the various possibilities of the kit 1 (Figures 1-4).

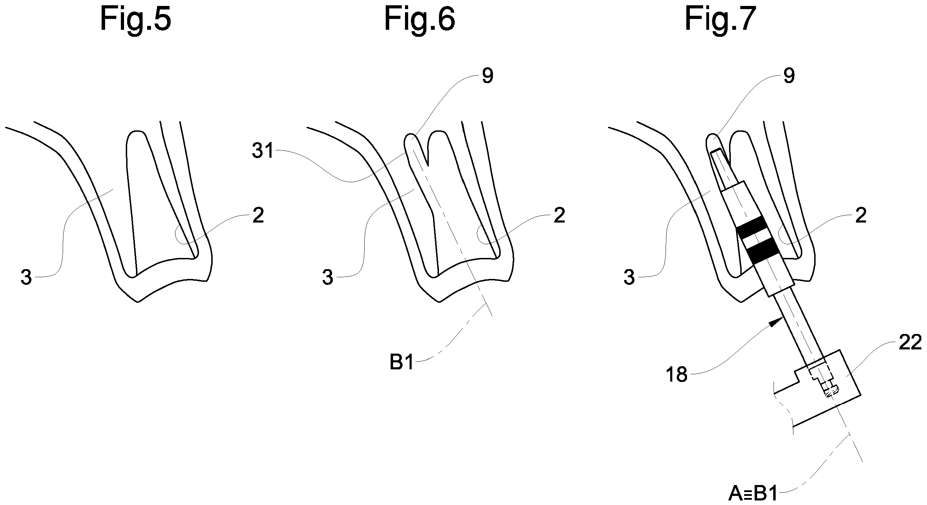

In a single dental session, therefore, the tooth is extracted, so as to expose the alveolar cavity 2 (Figure 5), and a preparatory hole 31 is drilled in the apical portion 9, with a conventional drill not shown in the figures, in the site where the future insertion of the dental implant is expected (Figure 6).

The dental drill 18, 19, 20 is then placed within the alveolar cavity 2, with the non-working distal portion 13 inserted within the preparatory hole; in this position, the axis A of the dental drill 18, 19, 20 is arranged along a first direction B1 (Figure 7).

The tool 22 to which the proximal portion 11 of the dental drill 18, 19, 20 is connected is then electrically driven and the drill itself 18, 19, 20 is therefore set in rotation with respect to its axis A.

The dentist can then begin to remove part of the alveolar bone 3, particularly in the palatal/lingual direction, by gentle oscillating movements of the dental drill 18, 19, 20 using the non-working distal portion 13 inserted into the preparatory hole 31 as a fulcrum of rotation F. The removal of the palatal/lingual bone with these oscillating movements results in the formation of a shower in the bone of the precise size to accommodate the implant with the correct inclination.

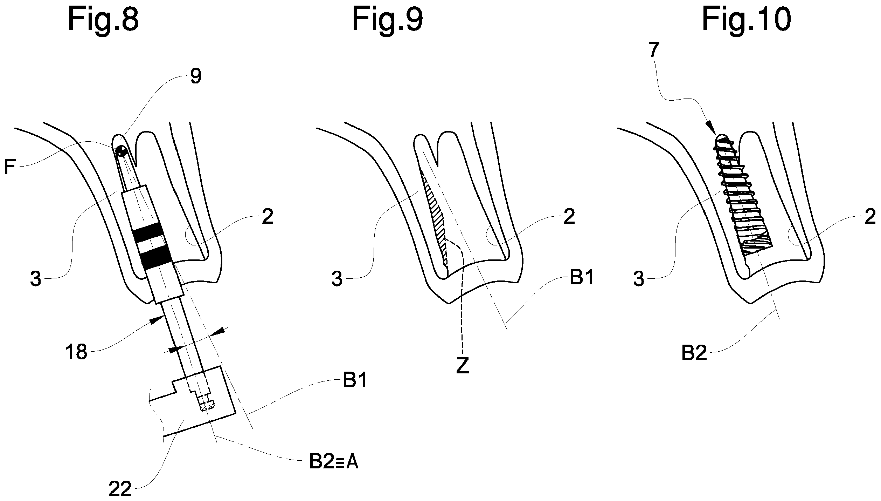

In other words, the axis A of the dental drill 18, 19, 20 is displaced from the first direction B1 to a second direction B2 rotated around the fulcrum of rotation F (Figure 8).

In this way, the dentist is not forced to work cantilevered as with conventional drills, i.e. in a condition in which the removal of the alveolar bone 3, in the palatal/lingual direction, depends exclusively on their manual ability to move the tool 22 without the aid of reference points; on the other hand, with the dental drills 18, 19, 20 of the kit 1 according to the invention, the free end 29 of the dental drills 18, 19, 20 can be used as a fulcrum of rotation F and the dentist's movements are more guided and, therefore, easier and more reproducible.

This operation is made possible by the fact that the distal portion 13 is non-working, i.e., it provides a smooth lateral surface 30 which, arranged in at least partial sliding contact with the preparatory hole 31, allows the dental drill 18, 19, 20 to work selectively by removing only the part of the alveolar bone 3 which comes into contact with the working median portion 12.

On the whole, therefore, this allows performing the surgery without the alveolar bone 3 being eroded in its deepest area, which is crucial in ensuring a good stability of the dental implant 7; in this way, the osteotomy is selective only in one area Z of the alveolar bone 3 easily workable thanks to the use of the free end 29 as a fulcrum of rotation F and can be performed immediately after the dental extraction (Figure 9).

Therefore, the distal portion of the osteotomy remains the same diameter as the preparatory hole 31, while the oscillating movements determine the formation of a shower on the palatal/lingual bone wall of a suitable diameter to allow the housing of the chosen implant.

The reference markings 27 also guide the operator during the removal of the alveolar bone 3 allowing the same to work on a section corresponding to a specific characteristic length L1, L2, L3, L4 which has been decided based on the dental implant 7 chosen.

Once enough space has been created in the palatal/lingual direction, the dental implant 7 is placed in the site (Figure 10).

After the operation, the patient is then asked to wait for a variable period of time during which the dental implant 7 can be integrated in the bone and then undergo a second session in which the abutment and the replacement dental crown can be installed.

After this last phase and a few months of therapy, the patient has finally completed his or her healing process and has a fully functioning replacement tooth.

It has in practice been ascertained that the described invention achieves the intended objects.

The fact is emphasized, in particular, that the peculiar construction of the dental drills according to the invention allows the operator to perform the removal of the palatal/lingual alveolar bone selectively, thus eliminating the risk of placing the post-extraction implant with a wrong vestibular inclination and, at the same time, maintaining a high stability of the implant in its placement.

This allows the implant to be safely installed in the same session in which the tooth is extracted, thus avoiding long waiting periods for the patient and consequent aesthetic and functional discomfort.

In addition to this, the various technical specifications that distinguish the numerous dental implants and dental drills in the kit according to the present invention allow operating in a plurality of different conditions and health needs, while allowing the patient a faster and safer recovery.

It is easy to appreciate, therefore, that the kit for the execution of post-extraction dental implant surgery of the present invention represents a more effective and versatile solution than the prior art.

## Claims

1. Kit (1) for the execution of post-extraction dental implant surgery, **characterized by** the fact that it comprises:
- a plurality of groups (4, 5, 6) of dental implants (7), each group (4, 5, 6) comprising at least one threaded pin (8) having a characteristic diameter (D1, D2, D3), the characteristic diameter (D1, D2, D3) of each of said groups (4, 5, 6) of dental implants (7) being different from the characteristic diameter (D1, D2, D3) of the other groups (4, 5, 6) of dental implants (7); and
- a plurality of dental drills (18, 19, 20), each of which is provided with:
- at least one proximal portion (11), connectable to a tool for the setting in rotation;
- at least one working median portion (12), having a reference diameter (d1, d2, d3) and adapted to remove at least a part of the alveolar bone (3);
- at least one non-working distal portion (13), adapted to be inserted, in use, inside a corresponding apical portion (9) of an alveolar cavity (2) without removal of the alveolar bone (3);
wherein each of said dental drills (18, 19, 20) corresponds to one of said groups (4, 5, 6) of dental implants (7) and has said reference diameter (d1, d2, d3) which is substantially matching the characteristic diameter (D1, D2, D3) of the corresponding group (4, 5, 6) of dental implants (7).

2. Kit (1) according to claim 1, **characterized by** the fact that said threaded pins (8) have a characteristic length (L1, L2, L3, L4), the characteristic lengths (L1, L2, L3, L4) of the threaded pins (8) belonging to a same group (4, 5, 6) of dental implants (7) being different from each other.

3. Kit (1) according to one or more of the preceding claims, **characterized by** the fact that said working median portion (12) comprises at least a first section (24) having a substantially straight cylinder shape.

4. Kit (1) according to one or more of the preceding claims, **characterized by** the fact that said working median portion (12) comprises at least a second section (25) having a substantially truncated cone shape.

5. Kit (1) according to one or more of the preceding claims, **characterized by** the fact that said working median portion (12) comprises a plurality of diamond cutting elements arranged on the surface of at least one of said sections.

6. Kit (1) according to one or more of the preceding claims, **characterized by** the fact that said working median portion (12) is provided with reference markings (27) arranged on the surface of said first section (24).

7. Kit (1) according to one or more of the preceding claims, **characterized by** the fact that said reference markings (27) comprise at least one depth notch (28) corresponding to a specific characteristic length (L1, L2, L3, L4) of at least one of said threaded pins (8).

8. Kit (1) according to one or more of the preceding claims, **characterized by** the fact that said non-working distal portion (13) has a substantially truncated-cone shape.

9. Kit (1) according to one or more of the preceding claims, **characterized by** the fact that said non-working distal portion (13) has a decreasing cross-section in the direction of moving away from said working median portion (12).

10. Kit (1) according to one or more of the preceding claims, **characterized by** the fact that said non-working distal portion (13) comprises at least one smooth lateral surface (30) adapted to be placed in sliding contact with said alveolar bone (3).

## Patentansprüche

1. Kit (1) zur Durchführung einer Postextraktionszahnimplantatoperation, **dadurch gekennzeichnet, dass** es Folgendes umfasst:
- eine Vielzahl von Gruppen (4, 5, 6) von Zahnimplantaten (7), wobei jede Gruppe (4, 5, 6) mindestens einen Gewindestift (8) mit einem charakteristischen Durchmesser (D1, D2, D3) umfasst, wobei der charakteristische Durchmesser (D1, D2, D3) jeder der Gruppen (4, 5, 6) von Zahnimplantaten (7) sich von dem charakteristischen Durchmesser (D1, D2, D3) der anderen Gruppen (4, 5, 6) von Zahnimplantaten (7) unterscheidet; und
- eine Vielzahl von Zahnbohrern (18, 19, 20), von denen jeder versehen ist mit:
- mindestens einem proximalen Abschnitt (11), der mit einem Werkzeug zum In-Drehung-Versetzen verbindbar ist;
- mindestens einen mittleren Arbeitsabschnitt (12), der einen Referenzdurchmesser (d1, d2, d3) aufweist und ausgebildet ist, mindestens einen Teil des Alveolarknochens (3) zu entfernen;
- mindestens einen nicht arbeitenden distalen Abschnitt (13), der ausgebildet ist, bei der Verwendung in einen entsprechenden apikalen Bereich (9) einer Alveolarhöhle (2) eingeführt zu werden, ohne den Alveolarknochen (3) zu entfernen;
wobei jeder der Zahnbohrer (18, 19, 20) einer der Gruppen (4, 5, 6) von Zahnimplantaten (7) entspricht und den Referenzdurchmesser (d1, d2, d3) aufweist, der im Wesentlichen dem charakteristischen Durchmesser (D1, D2, D3) der entsprechenden Gruppe (4, 5, 6) von Zahnimplantaten (7) entspricht.

2. Kit (1) nach Anspruch 1, **dadurch gekennzeichnet, dass** die Gewindestifte (8) eine charakteristische Länge (L1, L2, L3, L4) aufweisen, wobei die charakteristischen Längen (L1, L2, L3, L4) der Gewindestifte (8), die zu derselben Gruppe (4, 5, 6) von Zahnimplantaten (7) gehören, voneinander verschieden sind.

3. Kit (1) gemäß einem oder mehreren der vorstehenden Ansprüche, **dadurch gekennzeichnet, dass** der mittlere Arbeitsabschnitt (12) mindestens einen ersten Bereich (24) mit einer im Wesentlichen geraden Zylinderform umfasst.

4. Kit (1) gemäß einem oder mehreren der vorstehenden Ansprüche, **dadurch gekennzeichnet, dass** der mittlere Arbeitsabschnitt (12) mindestens einen zweiten Bereich (25) mit einer im Wesentlichen kegelstumpfförmigen Form umfasst.

5. Kit (1) gemäß einem oder mehreren der vorstehenden Ansprüche, **dadurch gekennzeichnet, dass** der mittlere Arbeitsabschnitt (12) eine Vielzahl von Diamantschneidelementen umfasst, die auf der Oberfläche von mindestens einem der Bereiche angeordnet sind.

6. Kit (1) gemäß einem oder mehreren der vorstehenden Ansprüche, **dadurch gekennzeichnet, dass** der mittlere Arbeitsabschnitt (12) mit Referenzmarkierungen (27) versehen ist, die auf der Oberfläche des ersten Bereichs (24) angeordnet sind.

7. Kit (1) gemäß einem oder mehreren der vorstehenden Ansprüche, **dadurch gekennzeichnet, dass** die Referenzmarkierungen (27) mindestens eine Vertiefungskerbe (28) umfassen, die einer bestimmten charakteristischen Länge (L1, L2, L3, L4) von mindestens einem der Gewindestifte (8) entspricht.

8. Kit (1) gemäß einem oder mehreren der vorstehenden Ansprüche, **dadurch gekennzeichnet, dass** der nicht arbeitende distale Abschnitt (13) eine im Wesentlichen kegelstumpfförmige Form aufweist.

9. Kit (1) gemäß einem oder mehreren der vorstehenden Ansprüche, **dadurch gekennzeichnet, dass** der nicht arbeitende distale Abschnitt (13) einen abnehmenden Querschnitt in der Richtung weg von dem mittleren Arbeitsabschnitt (12) aufweist.

10. Kit (1) nach einem oder mehreren der vorstehenden Ansprüche, **dadurch gekennzeichnet, dass** der nicht arbeitende distale Abschnitt (13) mindestens eine glatte Seitenfläche (30) umfasst, die ausgebildet ist, in Gleitkontakt mit dem Alveolarknochen (3) gebracht zu werden.

## Revendications

1. - Kit (1) pour l'exécution d'une chirurgie d'implant dentaire post-extraction, **caractérisé par le fait qu'**il comprend :
- une pluralité de groupes (4, 5, 6) d'implants dentaires (7), chaque groupe (4, 5, 6) comprenant au moins une tige filetée (8) ayant un diamètre caractéristique (D1, D2, D3), le diamètre caractéristique (D1, D2, D3) de chacun desdits groupes (4, 5, 6) d'implants dentaires (7) étant différent du diamètre caractéristique (D1, D2, D3) des autres groupes (4, 5, 6) d'implants dentaires (7) ; et
- une pluralité de fraises dentaires (18, 19, 20), dont chacune comporte :
- au moins une partie proximale (11), pouvant être reliée à un outil pour la mise en rotation ;
- au moins une partie médiane fonctionnelle (12), ayant un diamètre de référence (d1, d2, d3) et conçue pour retirer au moins une partie de l'os alvéolaire (3) ;
- au moins une partie distale non-fonctionnelle (13), conçue pour être insérée, en utilisation, à l'intérieur d'une partie apicale correspondante (9) d'une cavité alvéolaire (2) sans retrait de l'os alvéolaire (3) ;
dans lequel chacune desdites fraises dentaires (18, 19, 20) correspond à l'un desdits groupes (4, 5, 6) d'implants dentaires (7) et a ledit diamètre de référence (d1, d2, d3) qui correspond sensiblement au diamètre caractéristique (D1, D2, D3) du groupe (4, 5, 6) correspondant d'implants dentaires (7).

2. - Kit (1) selon la revendication 1, **caractérisé par le fait que** lesdites tiges filetées (8) ont une longueur caractéristique (L1, L2, L3, L4), les longueurs caractéristiques (L1, L2, L3, L4) des tiges filetées (8) appartenant à un même groupe (4, 5, 6) d'implants dentaires (7) étant différentes les unes des autres.

3. - Kit (1) selon une ou plusieurs des revendications précédentes, **caractérisé par le fait que** ladite partie médiane fonctionnelle (12) comprend au moins une première section (24) ayant une forme de cylindre sensiblement droite.

4. - Kit (1) selon une ou plusieurs des revendications précédentes, **caractérisé par le fait que** ladite partie médiane fonctionnelle (12) comprend au moins une seconde section (25) ayant une forme sensiblement tronconique.

5. - Kit (1) selon une ou plusieurs des revendications précédentes, **caractérisé par le fait que** ladite partie médiane fonctionnelle (12) comprend une pluralité d'éléments de coupe en diamant disposés sur la surface d'au moins une desdites sections.

6. - Kit (1) selon une ou plusieurs des revendications précédentes, **caractérisé par le fait que** ladite partie médiane fonctionnelle (12) comporte des repères (27) disposés sur la surface de ladite première section (24).

7. - Kit (1) selon une ou plusieurs des revendications précédentes, **caractérisé par le fait que** lesdits repères (27) comprennent au moins un cran de profondeur (28) correspondant à une longueur caractéristique (L1, L2, L3, L4) spécifique d'au moins une desdites tiges filetées (8).

8. - Kit (1) selon une ou plusieurs des revendications précédentes, **caractérisé par le fait que** ladite partie distale non fonctionnelle (13) a une forme sensiblement tronconique.

9. - Kit (1) selon une ou plusieurs des revendications précédentes, **caractérisé par le fait que** ladite partie distale non fonctionnelle (13) a une section transversale décroissante dans la direction s'éloignant de ladite partie médiane fonctionnelle (12).

10. - Kit (1) selon une ou plusieurs des revendications précédentes, **caractérisé par le fait que** ladite partie distale non fonctionnelle (13) comprend au moins une surface latérale lisse (30) conçue pour être placée en contact coulissant avec ledit os alvéolaire (3).
